# EUROPÄISCHE PATENTANMELDUNG

(11) **EP 1 598 589 A2**
(43) Veröffentlichungstag der Anmeldung: **23.11.2005**
(21) Anmeldenummer: 05103976.6
(22) Anmeldetag: 12.05.2005
(51) Int. Cl.: F16L 57/04

(54) **Brandschutzmaterial**

(30) Priorität: 18.05.2004 DE 102004024501
(71) Anmelder: HILTI Aktiengesellschaft, 9494 Schaan (LI)
(72) Erfinder: Semler, Rudolf, 86931, Prittriching (DE)
(74) Vertreter: Wildi, Roland

(57) **Zusammenfassung**

Die Erfindung betrifft ein Brandschutzmaterial (10) zur Abschottung von Leitungen (20), wie Kabelkanälen oder Rohren im Brandfall.

Das Brandschutzmaterial weist eine Matrix (11) aus einem unter Wärmeeinwirkung schrumpfbarem Kunststoffmaterial auf, in welche Einschlüsse (12) eines brandschutzaktiven Materials eingebettet sind.

## Beschreibung

Die Erfindung betrifft ein Brandschutzmaterial, der im Oberbegriff von Patentanspruch 1 genannten Art.

Derartiges Brandschutzmaterial wird z. B. in Form von Rohrabschnitten, Matten oder als Bandage zur Abschirmung von Leitungen, wie Kabel, Kabeltrassen, isolierten Stahlrohren, Kunststoffrohren und etc. eingesetzt, um diese im Falle eines Feuers vollständig abzudrükken und zu verschliessen. Die vorgenannten Kabel, Leitungen etc. werden dazu im Bereich einer Mauerdurchführung ringförmig mit dem Brandschutzmaterial bekleidet bzw. umwickelt.

Aus der WO 99/18303 A1 ist ein Verfahren zur Brandschutzschottung von Rohren und Kabelkanälen bekannt, bei dem im Bereich einer Wanddurchführung verschiedene Brandschutzmaterialien in Schichten um Rohre oder Kabelkanäle herum angeordnet werden. So wird z. B. um eine Rohrleitung zunächst ein bandförmiges intumeszierendes Material herumgelegt und anschliessend um diese Schicht eine Schicht aus einem unter Hitzeeinwirkung schrumpfenden Material angeordnet. Durch nachfolgendes Erwärmen im Brandfall zieht sich diese Schicht aus schrumpfendem Material zusammen und unterstützt das Abdrücken des Rohres durch die Intumeszensmasse.

Nachteilig an den bekannten Lösungen ist der notwendige Montageaufwand, der mehrere Arbeitsschritte erfordert.

Der vorliegenden Erfindung liegt die Aufgabe zugrunde, ein Brandschutzmaterial bereitzustellen, das einfach zu montieren ist und eine hohe Abschottungswirkung im Brandfall aufweist.

Erfindungsgemäss wird die Aufgabe dadurch gelöst, dass das Brandschutzmaterial eine Matrix aus einem unter Wärmeeinwirkung schrumpfbarem Kunststoffmaterial aufweist, in die Einschlüsse eines brandschutzaktiven Materials eingebettet sind. Die schrumpfbaren Kunststoffmaterialien sind z. B. Polyolefine, Fluorpolymere und Elastomere, deren Moleküle z. B. durch Strahlenpolimerisation vernetzt sind, während das brandschutzaktive Material z. B. ein intumeszierendes, keramisierendes oder ablatives Material ist. Durch diese Massnahme wird ein homogenes Brandschutzmaterial bereitgestellt das in nur einem Arbeitsschritt an eine Leitung angelegt und dort über ein Erwärmen dichtend aufgeschrumpft werden kann.

Produktionstechnisch von Vorteil kann es sein, wenn die Einschlüsse strangförmig ausgebildet sind, so dass das Brandschutzmaterial im Endlosverfahren z. B. als Bandware hergestellt werden kann. Dieses bandförmige Brandschutzmaterial kann dann um Leitungen herum gewickelt und anschliessend dichtend auf diese aufgeschrumpft werden.

Die Einschlüsse können natürlich auch jegliche andere Form aufweisen, wie z. B. eine kugelige, körnige oder stabförmige Form.

Günstig kann es sein, wenn das Brandschutzmaterial rohrförmig ausgebildet ist. Es kann so direkt auf eine Leitung aufgezogen und im Anschluss daran auf diese aufgeschrumpft werden.

Vorteilhaft kann auf einer Flachseite eines bandförmigen Brandschutzmaterials eine Klebeschicht aufgebracht sein, über die das Brandschutzmaterial vor dem Aufschrumpfen an einer Leitung vorfixiert werden kann.

Weiter vorteilhaft kann das Brandschutzmaterial auch als knetbare Masse ausgebildet sein. Diese kann flexibel auch an schlecht zugänglichen Leitungsdurchführungen eingesetzt werden und in engste Zwischenräume hineingedrückt werden. Durch anschliessendes Erwärmen kann das knetbare Brandschutzmaterial dann dichtend auf die Leitung aufgeschrumpft werden.

Weitere Vorteile und Massnahmen der Erfindung ergeben sich aus den Unteransprüchen, der nachfolgenden Beschreibung und den Zeichnungen. In den Zeichnungen ist die Erfindung in mehreren Ausführungsbeispielen dargestellt.

### Es zeigen:

- Fig. 1: ein um eine Leitung herum angeordnetes erfindungsgemässes ringförmiges Brandschutzmaterial im Querschnitt,

- Fig. 2: das Brandschutzmaterial aus Fig. 1 im auf die Leitung aufgeschrumpften Zustand,
- Fig. 3: einen Schnitt durch ein bandförmiges erfindungsgemässes Brandschutzmaterial,
- Fig. 4: einen Schnitt durch das bandförmige Brandschutzmaterial entlang der Linie IV - IV aus Fig. 3,
- Fig. 5: einen Schnitt durch ein knetmassenartiges erfindungsgemässes Brandschutzmaterial.

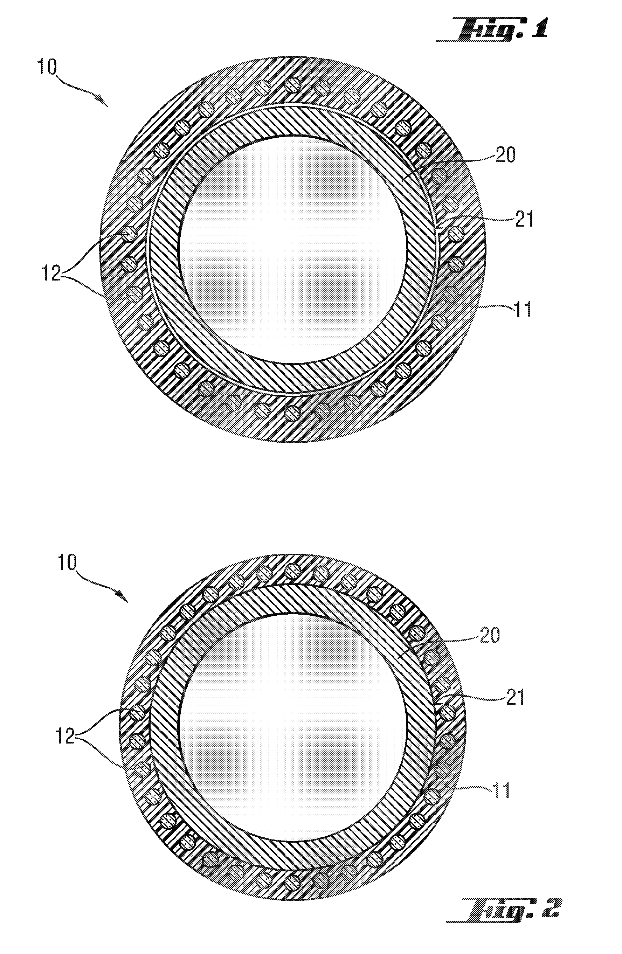

Fig. 1 zeigt ein Brandschutzmaterial 10 in Form eines rohrförmigen Abschnitts, welches um eine hier als Rohr ausgebildete Leitung 20 herum angeordnet ist. Das Brandschutzmaterial 10 weist eine Matrix 11 aus einem unter Wärmeeinwirkung schrumpfbaren Kunststoffmaterial auf. Derartige schrumpfbare Kunststoffmaterialien sind z. B. Polyolefine, Fluorpolymere und Elastomere, deren Moleküle z. B. durch Strahlenpolimerisation vernetzt sind. In die Matrix eingearbeitet sind Einschlüsse 12 aus einem brandschutzaktiven Material, wie z. B. einem intumeszierenden, keramisierenden oder ablativen Material. Derartige Materialien sind z. B. Blähgraphit, Vermiculite, Natriumsilikat, chemisch intumeszierende Stoffe (wie z. B. Mischungen aus APP, Melamin, Pentaerytrit). Diese Einschlüsse 12 können z. B. körnig, kugelig, stabförmig, strangförmig, faserig oder ähnlich ausgebildet sein. Die Grösse der Einschlüsse 12 kann von fein-dispers (Staubpartikelgrösse) bis hin zu ein bis mehreren Millimeter betragen. Bei strangförmigen oder faserigen Einschlüssen 12 kann deren Länge jeweils ungefähr der axialen Länge des rohrförmigen Brandschutzmaterials 10 entspricht.

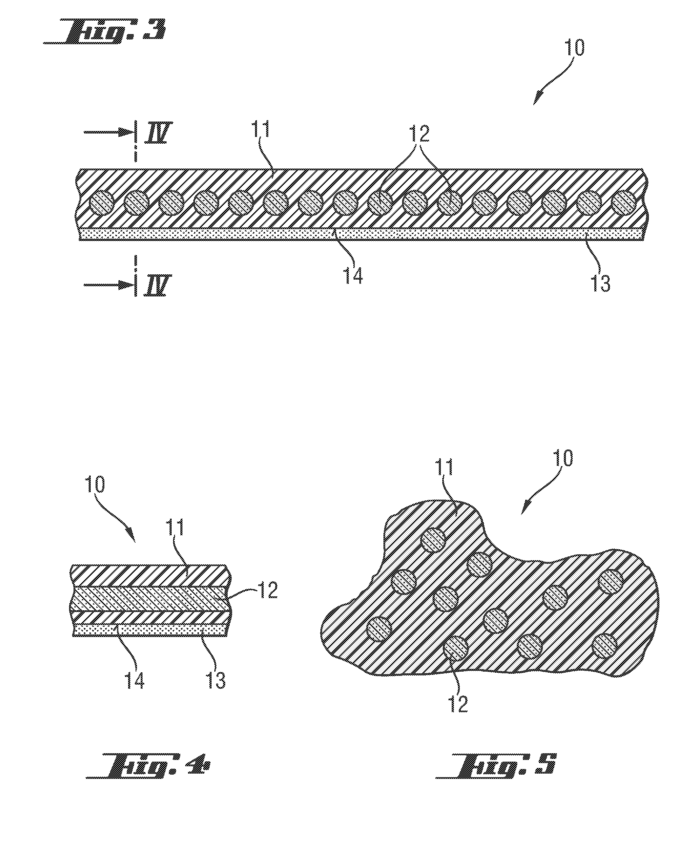

In Fig. 2 wurde der rohrförmige Abschnitt aus Brandschutzmaterial 10 durch eine lokale Wärmebehandlung (z. B. Erwärmung auf ca. 70° C) auf die Leitung 20 aufgeschrumpft. Das Material der Matrix 11 ist durch die Wärmebehandlung auf ca. 70 - 25 % seiner ursprünglichen Ausdehnung geschrumpft, so dass das Brandschutzmaterial nun dicht an der Oberfläche 21 der Leitung 20 anliegt.

Im Brandfall bei Erwärmung des Materials auf z. B. über 100° C wird das z. B. intumeszierende Material der Einschlüsse 12 sich aufblähen und die Leitung 20 dadurch abgedrückt. Hierdurch wird ein Übergreifen des Brandes verhindert.

In Fig. 3 ist das Brandschutzmaterial 10 als bandförmiges Flachmaterial ausgebildet. Die Matrix 11 ist wiederum aus einem unter Wärmeeinwirkung schrumpfbaren Kunststoffmaterial gebildet, in der Einschlüsse 12 aus dem bereits beschriebenen brandschutzaktivem Material eingebettet sind. An einer Flachseite 14 des Brandschutzmaterials 10 ist eine Klebeschicht 13 angeordnet mittels derer das Brandschutzmaterial 10 an einer Leitung zumindest vorfixiert werden kann. Wie Fig. 4 zu entnehmen ist, sind die Einschlüsse 12 hier strangförmig ausgebildet und verlaufen ungefähr parallel zur Längserstreckung des Brandschutzmaterials 10. In der montierten Lage des Brandschutzmaterials 10 umgibt dieses eine Leitung 20 analog zu Fig. 2.

Gemäss Fig. 5 kann das Brandschutzmaterial 10 auch als knet- bzw. verformbare Masse ausgebildet sein und weist eine Matrix 11 aus einem unter Wärmeeinwirkung schrumpfbaren Kunststoffmaterial auf, die auch elastisch verformbar ist. In dieser Matrix 11 sind wiederum Einschlüsse 12 aus einem brandschutzaktiven Material angeordnet, wie es bereits vorhergehend beschrieben worden ist.

Die Masse nach Fig. 5 ist sehr flexibel einsetzbar und kann auch in engsten Bauräumen noch angewendet werden.

## Patentansprüche

1. Brandschutzmaterial zur Abschottung von Leitungen (20), wie Kabelkanälen oder Rohren im Brandfall,
**gekennzeichnet durch**,
eine Matrix (11) aus einem unter Wärmeeinwirkung schrumpfbarem Kunststoffmaterial in welche Einschlüsse (12) eines brandschutzaktiven Materials eingebettet sind.

2. Brandschutzmaterial nach Anspruch 1, **dadurch gekennzeichnet, dass** die Einschlüsse (12) strangförmig ausgebildet sind.

3. Brandschutzmaterial nach Anspruch 1 oder 2, **gekennzeichnet durch** einen rohrförmigen Habitus.

4. Brandschutzmaterial nach Anspruch 1 oder 2, **gekennzeichnet durch** eine Ausbildung als bandförmiges Flachmaterial.

5. Brandschutzmaterial nach Anspruch 4, **dadurch gekennzeichnet, dass** auf einer Flachseite eine Klebeschicht (13) aufgebracht ist.

6. Brandschutzmaterial nach Anspruch 1 oder 2, **gekennzeichnet durch** eine Ausbildung als knetbare Masse.
